(19) Europäisches Patentamt
European Patent Office
Office européen des brevets

(11) **EP 4 198 885 A1**

(12) **EUROPEAN PATENT APPLICATION**

(43) Date of publication:
**21.06.2023 Bulletin 2023/25**

(21) Application number: **21216170.7**

(22) Date of filing: **20.12.2021**

(51) International Patent Classification (IPC):
***G06T 7/00*** *(2017.01)* ***G06T 7/254*** *(2017.01)*
***G06T 7/269*** *(2017.01)* ***G06T 7/50*** *(2017.01)*
***G06T 7/62*** *(2017.01)*

(52) Cooperative Patent Classification (CPC):
**G06T 7/269; G06T 7/0004; G06T 7/0008; G06T 7/254; G06T 7/50; G06T 7/62;**
G06T 2207/10016; G06T 2207/20076; G06T 2207/20081; G06T 2207/20092; G06T 2207/30232

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hades Technologies AG**
**8005 Zürich (CH)**

(72) Inventor: **Naser, Felix**
**80804 Munich (DE)**

(74) Representative: **Fischer, Michael Maria et al**
**Venner Shipley Germany LLP**
**Zeppelinstraße 73**
**81669 München (DE)**

(54) **SEWER REPORTING AND VIEWING**

(57) Disclosed herein is a computer-implemented method of automated or assisted inspection of a sewer line. The method includes performing a supervised data analysis stream on an input survey video of the sewer line, which includes performing prediction with a supervised learning method on frames of the input survey video to analyse the frames regarding defects. The method further includes performing an unsupervised data analysis stream on the input survey video which includes performing prediction with an unsupervised learning method on the input survey video to obtain geometrical information; and performing a 3D reconstruction of the sewer line based on the geometrical information. Then results of the supervised data analysis stream and the unsupervised data analysis stream are combined.

160
Combining results of supervised and unsupervised data analysis streams (and optionally other data analysis streams)
110
130
136
Defect analysis
118
Video analysis method
134
3D reconstruction of sewer line
115
Prediction of supervised learning method
132
Prediction of unsupervised learning method
140
Human codes, meta data or other relevant information
210
Training of supervised learning method
105
Input Survey Video
220
Training of unsupervised learning method

Fig. 1

EP 4 198 885 A1

## Description

### FIELD OF THE INVENTION

The invention relates to the technical field of digital video processing, more particularly to automated or assisted sewer inspection and even more particularly to sewer inspection based on supervised and unsupervised learning.

### BACKGROUND OF THE INVENTION

An underground sewer system is typically one of the biggest infrastructures of any modern city around the world. Sewer systems are important for urban drainage and groundwater safety. However, sewer systems are deteriorating over time due to various defects. The most critical steps to avoid sewer system/pipe/line deterioration is to assess the sewer condition regularly. At present, the procedure for condition assessment work developed around the world basically encompasses three parts, including sewer pipes' structural and functional data acquisition by inspection technologies, defects' identification and severity level evaluation, and assessment report generation for rehabilitation, repairs, and maintenance.

The collection of relevant data and information is the first and a basic step to do the sewer condition assessment. Various technologies have been developed and applied in sewer inspection. A recent survey conducted a thorough investigation of these methods and categorized them into visual methods, electromagnetic methods, acoustic methods, and ultrasonic methods. With the advantage of cost effective and simple operation, CCTV is a well-adopted technique for the inspection of the sewer pipe's inner surface. CCTV camera and lighting apparatus mounted on a carrier are the main tools for the CCTV inspection system to obtain internal information of sewer pipelines.

However, sewer inspectors need to conduct the inspection in a stop and check manner to examine any region of potential interest, which significantly slows down the inspection process. In addition, the pipe defects identification and their severity levels' evaluation are time-consuming, error-prone, and subjective due to the lack of relevant image analysis methods under current practice.

The report generation process generally requires an inspector to collect data of a sewer line. This raw survey data is then manually further summarized by a human expert in a report which includes the most relevant data points of the sewer line. To illustrate the amount of work involved, a survey video can contain thousands of frames but only the selected ones are part of the final report.

US721581B2 describes a method and apparatus for the automated detection and classification of defects in sewer lines. EP1305594B1 discloses an apparatus and method for detecting defects or damage inside a sewer lines. US8024066B2 discloses an autonomous inspector mobile platform. It proposes an autonomous robot without any AI/machine learning or deep learning components with regards to image analysis. KR102008973B1 describes an apparatus and method for detection of a defect of a sewer pipe based on Deep Learning. TWM607552U discloses an intelligent monitoring and control system for sewage. US20210181119A1 describes a system and method for inspection of a sewer line using machine learning.

Although supervised AI technologies (e.g., CNN model variants) are known which show how to (semi-)automate inspection processes of sewer lines, the following shortcomings exist in the prior art. Often too few classes are analysed. The accuracy of existing systems is low and does not reach human expert quality. Only standard filter or supervised learning methods have been utilized all of which require human expert labels. No 3D reconstruction based solely on 2D videos was possible. Therefore, a desire exists among practitioners in the field to overcome these shortcomings. The shortcomings in the state of the art are overcome and the automated inspection of a sewer line is further improved by the computer-implemented method according to the present disclosure.

### SUMMARY OF THE INVENTION

Starting from a supervised learning system for detecting defects in a sewer line, the inventor suggests to supplement the result of the supervised data analysis stream by providing an unsupervised data analysis stream that provides extra information and to finally combine the results of two data analysis streams into one output stream in order to improve accuracy and to enable better viewing of the sewer line. A technical effect of the invention is that supervised and unsupervised learning methods synergistically interact to provide improved results regarding sewer reporting and viewing. To overcome the shortcomings of the prior art, the inventor has recognized that unsupervised learning may be used to improve accuracy, defect analysis, report generation and provide a 3D reconstruction view of the sewer line.

According to a first aspect, a computer-implemented method of automated or assisted inspection of a sewer line is provided. The method includes performing a supervised data analysis stream on an input survey video of the sewer line. The performing the supervised data analysis stream includes performing prediction with a supervised learning method on frames of the input survey video to analyse the frames regarding defects. The method further includes performing an unsupervised data analysis stream on the input survey video. The performing the unsupervised learning method includes performing prediction with an unsupervised learning method on the input survey video to obtain geometrical information; and performing a 3D reconstruction of the sewer line based on the geometrical information; and combining results of the supervised data analysis stream and the unsupervised data analysis stream.

According to a second aspect, one or more computer-readable storage media are provided which include computer-executable instructions stored thereon which, when executed by one or more processors, cause the one or more processors to perform the computer-implemented method according to the first aspect.

According to a third aspect, a computer system is provided which includes one or more processors; one or more computer-readable storage media having computer-executable instructions stored thereon, wherein the one or more computer-executable instructions are configured to cause the one or more processors to perform the computer-implemented method according to the first aspect.

According to a fourth aspect, a computer-implemented method for obtaining a 3D reconstruction view of a sewer line is provided. The method includes performing prediction with an unsupervised learning method on an input survey video of a sewer line to obtain geometrical information, performing a 3D reconstruction of the sewer line based on the geometrical information to obtain a 3D reconstruction view of the sewer line.

According to a fifth aspect, one or more computer-readable storage media are provided which include computer-executable instructions stored thereon which, when executed by one or more processors, cause the one or more processors to perform the computer-implemented method according to the fourth aspect.

According to a sixth aspect, a computer system is provided which includes one or more processors; one or more computer-readable storage media having computer-executable instructions stored thereon, wherein the one or more computer-executable instructions are configured to cause the one or more processors to perform the computer-implemented method according to the third aspect.

These and other features of the systems, methods, and computer-readable storage media disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like numerals designate corresponding parts in various figures. It is to be expressly understood, however, that the drawings are for purposes of illustration and description only and are not intended as a definition of the limits of the scope of protection.

## BRIEF DESCRIPTION OF THE DRAWINGS

Fig. 1 shows an overview of a computer-implemented method for automated or assisted sewer inspection according to embodiments of the invention.

Fig. 2 shows an overview of a training phase for a supervised learning method and a training phase of an unsupervised learning method, that is performed before the computer-implemented method of automated or assisted sewer inspection shown in Fig. 1, according to embodiments of the invention.

Fig. 3 illustrates principles of a video analysis method within a supervised data analysis stream in more detail, according to embodiments of the invention.

Fig. 4 shows an automated data set generation as part of the training phase of the unsupervised training method in more detail, according to embodiments of the invention.

Figs. 5a and 5b illustrate the 3D reconstruction of the sewer line within an unsupervised data analysis stream in more detail, according to embodiments of the invention.

Figs. 6a, 6b and 6c illustrate the defect analysis of the sewer line within the unsupervised data analysis stream in more detail, according to embodiments of the invention.

Fig. 7 illustrates how a 3D reconstruction view can be obtained.

Fig. 8 illustrates combining results of the supervised data analysis stream and the unsupervised data analysis stream, according to embodiments of the invention.

Fig. 9 shows a sewer survey system, according to embodiments of the invention, and a sewer line.

Fig. 10 shows a block diagram that illustrates a computer system upon which any of the embodiments described herein may be implemented.

Although some Figures show certain procedural steps in a particular order, those skilled in the art will appreciate that some steps may be performed in a different order than that shown and/or some steps may be performed in parallel, skipped or substituted with methods producing comparable results.

The flowchart and block diagrams in the Figures illustrate the architecture, functionality, and operation of possible implementations of the systems, methods, and computer program products according to various embodiments of the present invention. In this regard, each block in the flowchart or block diagrams may represent a module, segment, or portion of program code, which comprises one or more executable instructions for implementing the specified logical function(s). It should be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based system that perform the specified functions or acts, or combinations of special purpose hardware and computer instructions.

The Figures depict various embodiments of the disclosed technology for purposes of illustration only, wherein the Figures use like references to identify like elements. One skilled in the art will readily recognize from the following discussion that alternative embodiments of the structures and methods illustrated in the Figures can be employed without departing from the principles of the disclosed technology described herein.

## DETAILED DESCRIPTION OF THE DRAWINGS

Certain features of various embodiments of the present technology are set forth with particularity in the appended claims. A better understanding of the features and advantages of the technology will be obtained by reference to the following detailed description that sets forth an illustrative embodiment.

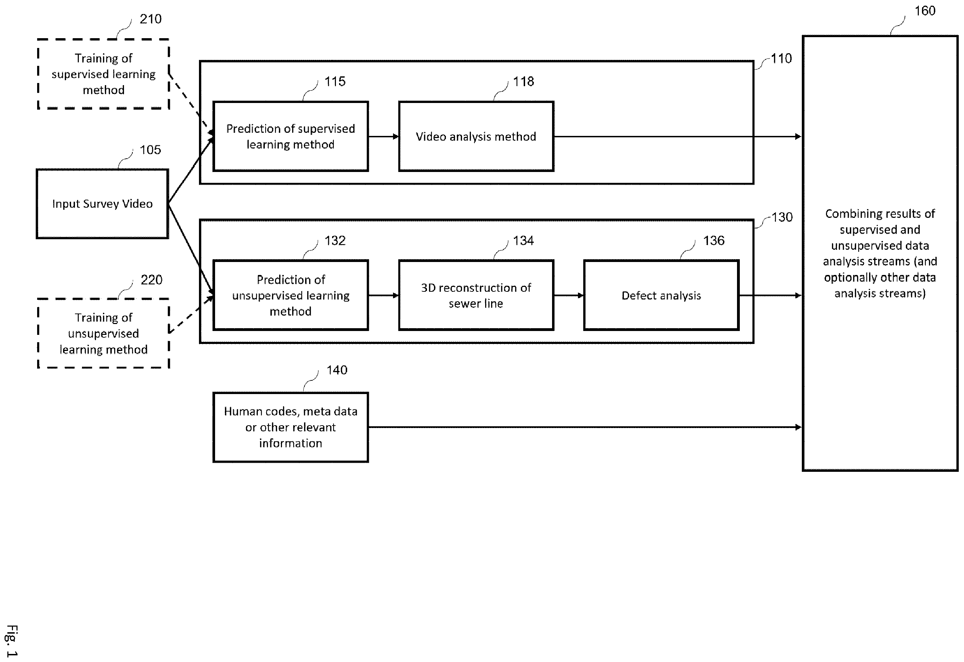

Fig. 1 shows a block diagram of obtaining an automated or assisted inspection of a sewer line. Before discussing the embodiment shown in Fig. 1 in more detail, a few items of the invention will be discussed. Embodiments of the invention relate to a computer-implemented method of automated or assisted inspection of a sewer line. The method includes performing a supervised data analysis stream on an input survey video of the sewer line. The performing the supervised data analysis stream includes performing prediction with a supervised learning method on frames of the input survey video to analyse the frames regarding defects. The method further includes performing an unsupervised data analysis stream on the input survey video. The performing the unsupervised data analysis stream includes performing prediction with an unsupervised learning method on the input survey video to obtain geometrical information; and performing a 3D reconstruction of the sewer line based on the geometrical information. The method further includes combining results of the supervised data analysis stream and the unsupervised data analysis stream. In some of the embodiments, the output of the method is a report containing detected defects and/or views of the sewer line.

The term "prediction" as used herein refers to using a machine learning model to predict the outcome for new (input) data points. Although it should be noted that in the literature the term "prediction" is sometimes interchangeably used with the term "inference", "inference" typically refers to using a machine learning model to learn about the data generation process.

The term "inspection" as used herein refers to the process of generating a report from raw inspection data, most notably from sewer line survey video data.

The term "defect analysis" as used herein refers to the process of performing prediction with a machine learning model in order to classify or detect defects from a input data point, e.g. single video frame. Detected defects may be shown or highlighted in a report.

The term "view" as used herein refers to a view of the sewer line which may be part of a report which may include video sequences and/or images or extend to a 3D reconstruction view of the sewer line which allows a human expert to virtually move in 3D space through the sewer line.

The term "supervised learning method" as used herein refers to a learning method in which a human being has labelled a training data set that is then used to train the supervised learning model. It infers a function from labelled training data consisting of a set of training examples. In supervised learning, each example is a pair consisting of an input object (e.g., image or bounding box/polygon) and a desired output value (also called the supervisory signal) (e.g., defect class). A supervised learning algorithm analyses the training data and produces an inferred function, which can be used for mapping new examples. Examples of supervised learning methods include CNN model variants such as the AlexNet (from the paper Alex Krizhevsky et al., "ImageNet Classification with Deep Convolutional Neural Networks", NeurIPS 2012) or object detection models such as YOLO (from the paper Joseph Redmon et al., "You Only Look Once: Unified, Real-Time Object Detection", CoRR 2015).

The term "unsupervised learning method" as used herein refers to a type of machine learning in which the algorithm is not provided with any pre-assigned labels or scores for the training data. As a result, unsupervised learning algorithms self-discovers any naturally occurring patterns in that training data set. In this case the inventor also proposes to automatically generate a data set which can be used to train an unsupervised monocular depth estimation framework. In this context it needs to be noted that this automatic data set generation does not mean to automatically generate data or labels. It solely means to pre-process the data in a way that it can be fed to a framework in a way that produces optimal results.

The term "monocular depth estimation" as used herein refers to the task of estimating/predicting scene depth using a single image.

In some of the embodiments, performing the unsupervised data analysis stream further includes an analysis of defects of the sewer line based on the 3D reconstruction of the sewer line. Thereby, no human expert labelling is needed anymore for a defect analysis.

In some of the embodiments, performing a supervised data analysis stream further includes performing a video analysis method by applying filtering on a sequence of the analysed frames (i.e. together, in one step) to reduce the number of frames. While prediction with a supervised learning method is typically performed individually on frames of the input survey video, the inventor has recognised that it may be beneficial to subsequently apply filtering on a sequence of frames (together, in one step) in order to exploit the continuous nature of the survey video which shows basically in many, if not all, very similar frames of one and the same sewer line. Thereby, the relevant data of a final report is significantly reduced.

Some of the embodiments include a further data analysis stream based on human codes, which are either from a database, detected via optical character recognition, meta data, or other information. These data may additionally improve the accuracy of the final output.

In some of the embodiments, filtering takes into account the continuous nature of the input survey video and is based on at least one of: interpolating missing position information, temporal filter, duplicating top-1 prediction filter, Laplacian filter, severity filter, probability of reliability filter, position filter, similarity filter, a remove good frames filter, and an add header filter.

In some of the embodiments, the supervised learning method is based on a convolutional neural network, CNN, which has been trained with labelled data sets.

In some of the embodiments, the unsupervised learning method is based on a monocular depth estimation model which has been trained using an automated data set generation method without human expert supervision or input.

In some of the embodiments, the automated data set generation method includes at least one of the following three steps: calculating mean or median optical flow magnitude and setting an appropriate pixel level threshold; calculating frame difference and setting an appropriate threshold; calculating a translation obtained via homography between two consecutive frames and setting an appropriate threshold deciding which translation level is enough to detect camera movement. The method further includes creating a metric of how to weight the calculated measures of how different two consecutive frames are.

In some of the embodiments, performing the 3D reconstruction of the sewer line includes: storing position information for each frame or point cloud to a database; calculating overall metrics of the point clouds; extracting optimal slices of the point clouds with the calculated overall metrics; calculating homography between two frames or point clouds and obtaining a rotation matrix; and accessing given information from the database for each frame or point cloud and completing the 3D reconstruction. Thereby allowing a human expert to view and virtually move through the sewer line in 3D space. This significantly improves the visibility of defects in the sewer line. Thus, in some of the embodiments, the 3D reconstruction may not only be used for subsequent defect analysis but also for obtaining an (e.g. improved or 3D) view of the sewer line. An improved view of the sewer line may enable a human inspector to better recognize defects.

In some of the embodiments, analysing defects based on the 3D reconstruction includes calculating an optimal radius of a given sewer line based on overall metrics; separating each optimal slice of a point cloud into sections; and selecting appropriate statistical thresholds to identify how severely the sewer diverges from the optimal radius by selecting appropriate statistical thresholds.

In some of the embodiments, combining the results of the supervised data analysis stream and the unsupervised data analysis stream comprises combining view data (e.g. obtained from the 3D reconstruction) with defect analysis data from the supervised data analysis stream, or combining defect analysis data from both streams. In some of the embodiments, data from one or more further data analysis streams is also combined.

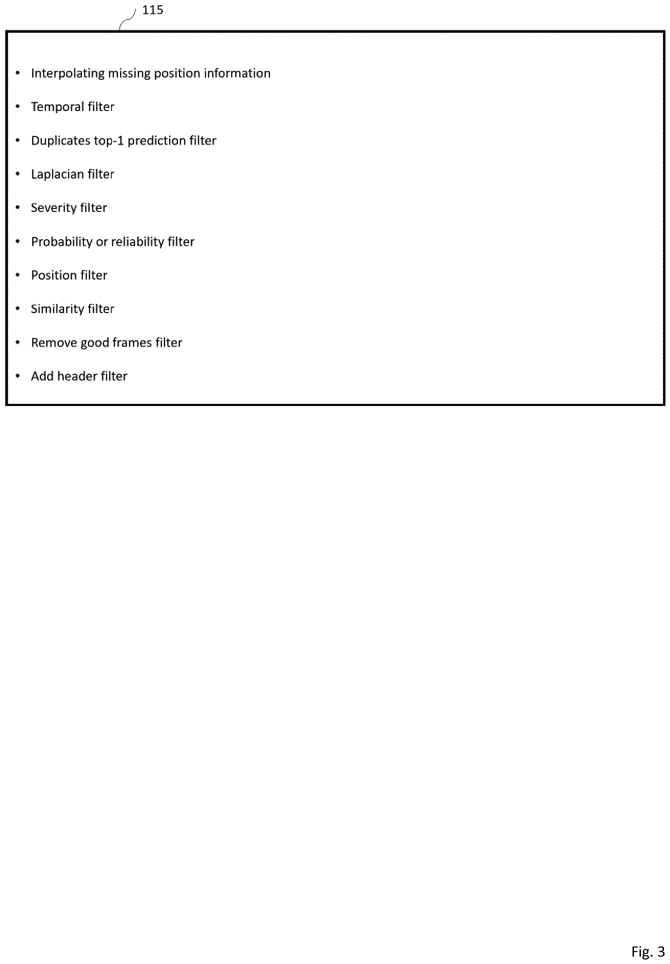

In some of the embodiments, combining the results of the supervised data analysis stream and the unsupervised data analysis stream comprises filtering. In some of the embodiments, one or more of the filtering methods as shown in Fig. 3 may be used to combine the results of the supervised data analysis stream and the unsupervised data analysis

In some of the embodiments, combining the results of the supervised data analysis stream and the unsupervised data analysis stream includes connecting frame sequences from supervised learning stream after the video analysis method and frame sequence from unsupervised learning stream; sorting the resulting combined sequence either by position information or by frame number; and passing the sorted frame sequence through a filtering. Thereby, the final combined frame sequence only contains frames which are part of a report without the need for human quality checks or supervision. The supervised data analysis stream can add defects to the report which have been present in the labelled data set and the unsupervised data analysis stream can add defects to the report which have not been seen or labelled before. Both data analysis streams can also cross-check and validate each other's results. This is a significant advantage over previous methods where only supervised data analysis stream where utilized.

Some of the embodiments further include using a view and defect analysis of the sewer line for generating a report for a user.

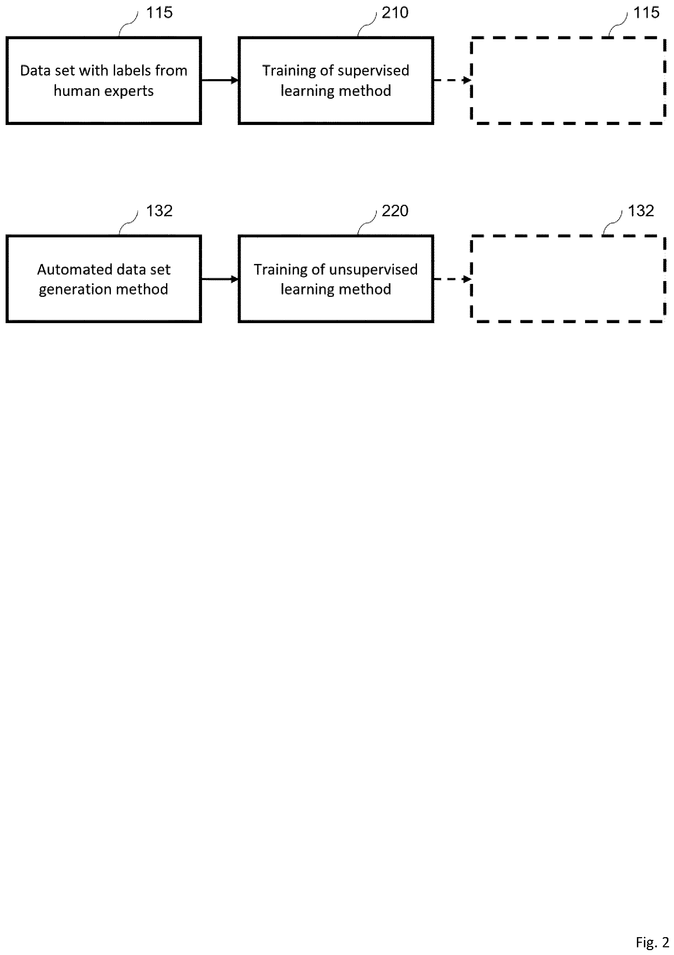

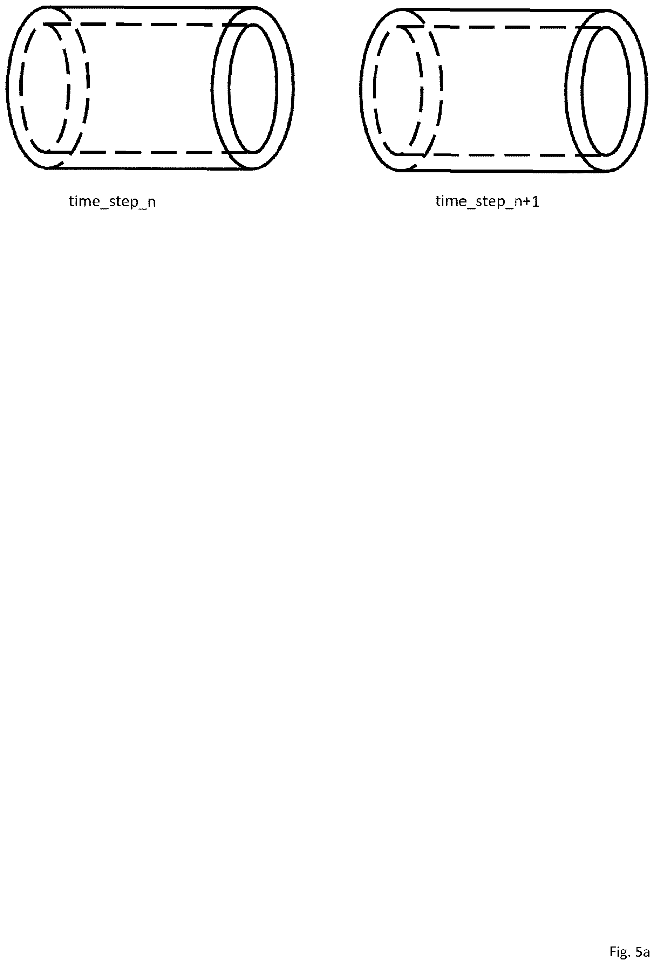

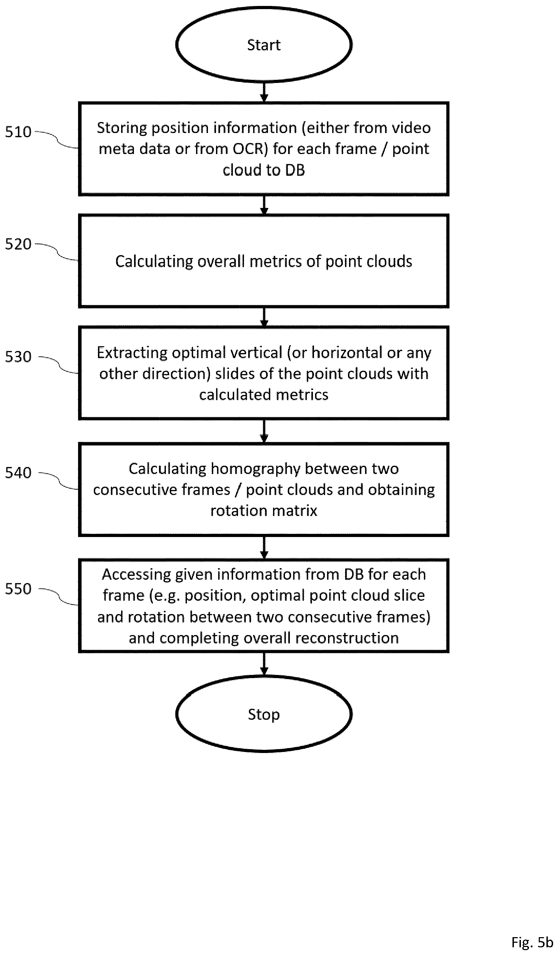

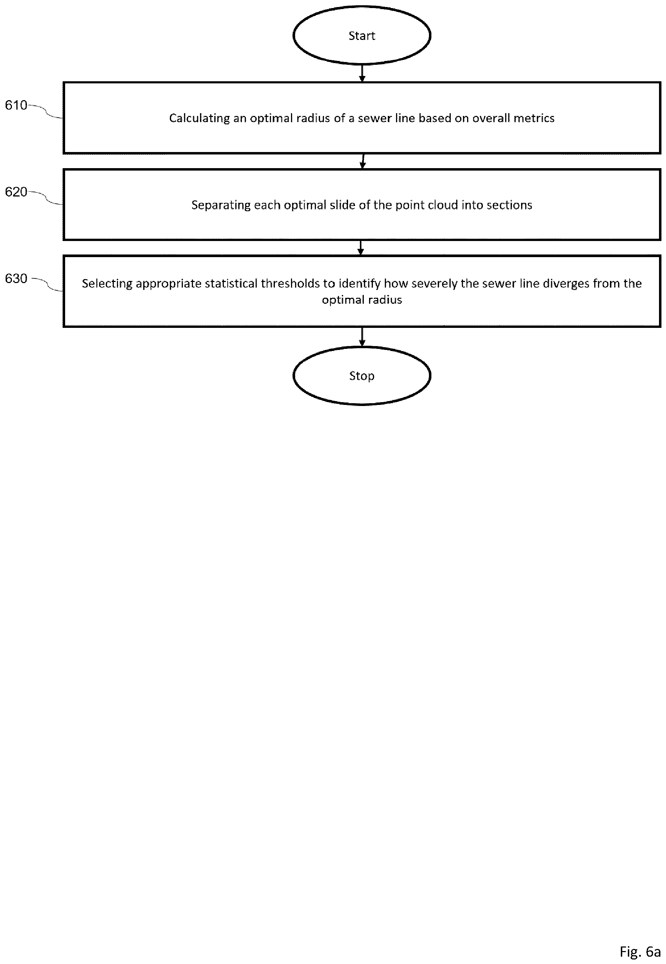

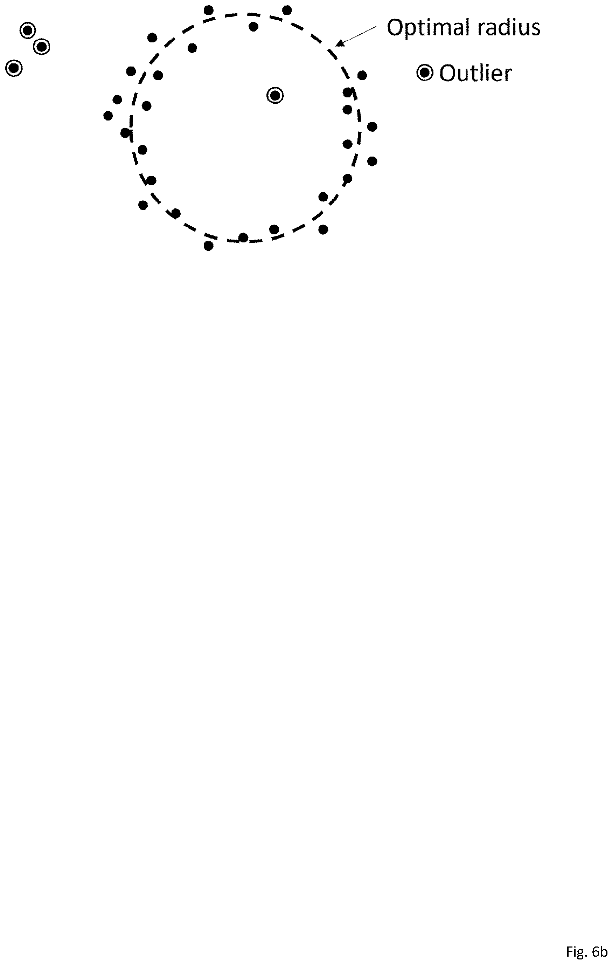

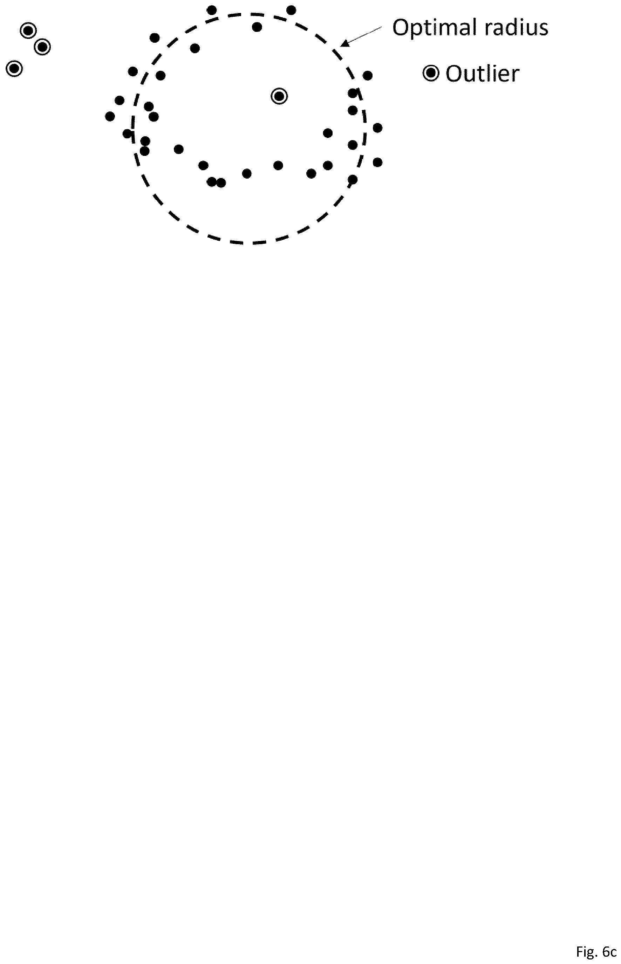

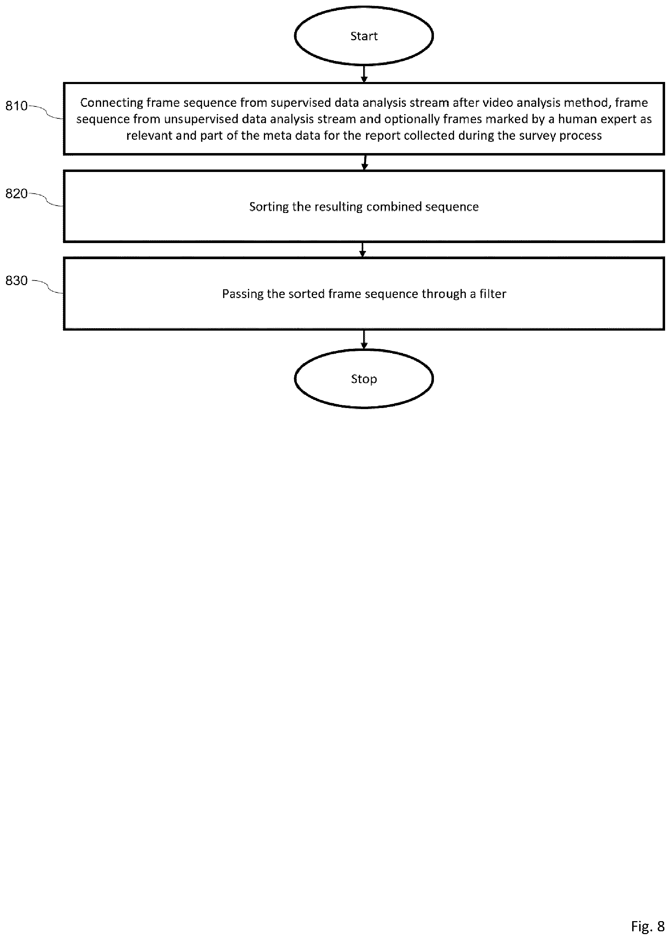

Returning now to Fig. 1 which shows an overview of a computer-implemented architecture that allows to perform automated or assisted sewer inspection. The method obtains as input an input survey video which is recorded by a CCTV inspection system. A prediction with a supervised learning method is performed on the input survey video. The input survey video contains video material of a sewer line in which the CCTV inspection system moves to record the video material. At 210, one can see that the supervised learning method has previously been trained which will be explained in more detail with reference to Fig. 2 and at 220, one can see that the unsupervised learning method also has been previously trained which will also be explained in more detail with reference to Fig. 2. The input survey video is processed in a supervised learning data analysis stream 110 and in an unsupervised learning data analysis stream 130. At 115, within the supervised learning data analysis stream 110, the survey video 105 is presented to a prediction module of the trained supervised learning method 115. For example, the supervised learning method is any neural network, for example a Convolutional Neural Network. The output of the prediction module of the supervised learning method is a frame sequence output in which defects of the sewer line have been recognized and are, for example, highlighted in the frame output. Moreover, a further output of the prediction phase of the supervised learning method is that the frames are classified into one of a number of observation classes (or objects in case the supervised learning method outputs bounding boxes/polygons or object regions) which indicates for example if the sewer shown in this frame does not have any defects of if it has a defect, which defect (out of a set of defects) it has. It should be mentioned that this classification is typically performed on each frame individually, while a subsequent video analysis method 118 is performed on a sequence of frames. Since the overall aim of the architecture is to obtain a view and report of the sewer inspection which only contains relevant defects and not the entire input video, the video analysis method 118 is subsequently applied. It should be noted that in all known systems the automated defect analysis is performed on a frame-by-frame basis without taking into account any filtering methods that exploit the continuous nature of survey videos or sequences of it. Therefore, by contrast, the video analysis method 118 as shown in Fig. 1, applies one or more filters to the prediction output of the supervised learning method. The one or more filters are not applied to each single frame individually but take into account a plurality of frames, i.e., the complete video or sequences of the video, at the same time. It should be noted that since the input video of the sewer line contains frames which all show the same sewer line and are therefore all quite similar in content, applying filters is a very efficient and useful means to reduce the number frames to a smaller number of relevant frames. Hence, the video analysis method 118 uses filters that take into account more than one frame at a time and therefore provide a means to reduce the number of relevant that should finally appear in a report that is studied by a human operator. At 132, a prediction with an unsupervised learning method is applied to the input survey video 105. In some of the embodiments, the unsupervised learning method is a monocular depth estimation model (e.g., AdaBins, MiDaS, Monodepth, etc.) which has been trained with an automatically generated data set as will be described in Fig. 2. The unsupervised learning method predicts for each frame of the input survey video 105 geometrical information, such as a RGBD depth prediction and a point cloud, which are stored in a database. Additionally, position information (either from video meta data or from optical character recognition) for each frame or point cloud is stored to a database. Based on the geometrical information, a 3D reconstruction of the sewer line is performed at 134, which will be explained in more detail at Figs. 5a and 5b. Finally, based on the 3D reconstruction of the sewer line, a defect analysis is performed at 136, which will be explained in more detail with reference to Figs. 6a, 6b and 6c. At 140, a further optional data analysis stream is shown which is based on human codes or other meta data. Meta data associated to the survey video can contain position information, human expert information regarding marked observations and more information about the survey such as location, date, time manholes, up/downstream and more. At 160, results of the supervised data analysis stream 110 and of the unsupervised data analysis stream 130 (and of one or more further optional data analysis streams) are combined which will be explained in more detail at Fig. 8.

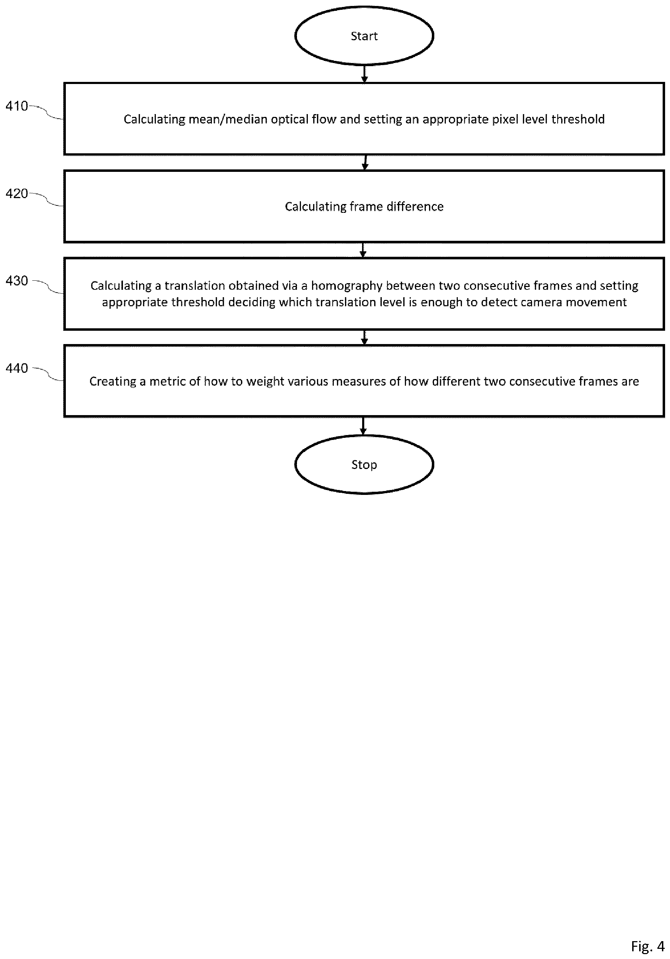

Fig. 2 illustrates the training phase of the supervised learning method and the unsupervised learning method in more detail. At 210, a data set with labels from human experts 212 is provided in a training phase to the supervised learning method. At 220, an automatically generated data set 222 is provided in a training phase to the unsupervised learning method. The automatic generation of the data set will be explained at Fig. 4.

Fig. 3 illustrates the principles and functionality of the video analysis method 118 in more detail. Since the overall aim of the video analysis method is to reduce the number of frames that are finally output in a report or presented to a human inspector. To this end, the video analysis method 118 employs, for example, one or more of the filters that are listed in Fig. 3 and which will be explained in the following. It should be mentioned that while the prediction of the supervised learning method classifies each frame individually (i.e. frame-by-frame) into an observation class, the filters of the video analysis method 118 are applied to a sequence of frames. Thereby, the continuous nature of the input video survey may be exploited, and the number of frames included into a report or output to a human inspector may be reduced.

- Interpolating missing position information

If e.g. frame_n is too blurry for optical character recognition, or a database does not contain the position information, this filter takes position information from previous and following frames to interpolate the missing position information. If e.g. frame_n-1 was captured at 1 meter and frame_n+1 at 3 meter, a frame_n will be reported at 2 meter.

- Temporal filter

A moving/rolling temporal average filter has been created to reduce the noise of the frame-by-frame predictions for each observation class where, (1) a sequence of n frames is selected, (2) a base frame is selected (e.g., by middle index of sequence) which contains meta information about the frame such as database links, (3) mean prediction percentage for each observation class is calculated and (4) mean frame is constructed.

- Duplicates top-1 prediction filter

A filter has been created which only retains most reliable top-1 class predictions in the list e.g., top-1 class predictions for consecutive frames are ["frame_n class_1 78%", "frame_n+1 class_1 82%, "frame_n+2 class_2 50%"]. This means that a resulting list only contains two frames ["frame_n+1 class_1 82%, "frame_n+2 class_2 50%"].

- Laplacian filter (or any other filter which allows for image quality filtering)

This filter removes e.g., too noisy frames.

- Severity filter

This filter checks for coherent top-n severity class predictions. E.g., if the top-5 predictions belong to the same severity class, the frame is retained if not it is discarded.

- Probability or reliability filter

This filter removes all frames which have a too low associated top-1 prediction accuracy.

- Position filter

This filter removes all frames which are according to an appropriate threshold too close to each other and keeps the best frame out of the ones which are too close by a certain metric (e.g., highest top-1 probability).

- Similarity filter

This filter removes all frames which are too similar so that only frames which contain a different part of the sewer are included in the final report. Possible filter steps include but are not limited to options from section automated data set generation.

- Remove good frames filter

This filter removes all frames which are not relevant for the final report, i.e. those frames which do not show any defects of the sewer line.

- Add header filter

This filter finds the frame with the header information for example by an optical character recognition analysis of frames and adds the relevant information to the report if no database attached to the video which can contain this information already is available.

The order of the filters as listed above does not imply any temporal relationship between the application of the different filters. Rather, the one or more filters may be employed in any temporal order. These or more potentially also learning based filter techniques allow to incorporate only relevant frames into the final report and reduce the time an operator has to spend with report generation significantly. According to experiments in which the time has been measured it takes to generate a report without these filters (only frame-by-frame classifications) vs. the time it takes to generate a report with these filters is on average 20 minutes vs. 5 minutes.

Fig. 4 illustrates the automated data set generation method 222 (as shown in Fig. 2) used for the training of the unsupervised learning method in more detail. The input to this method is raw survey video footage. In some of the embodiments the unsupervised learning method is a monocular depth estimation network. Typically, for training the unsupervised monocular depth estimation network, a human level quality check needs to be performed to take out frames which 1) do not change between time steps but only contain the same static information or 2) other irregularities that might cause worse learning results. When this quality check is not performed, significant performance losses are reported (e.g., https://paperswithcode.com/task/monocular-depth-estimation). To address this problem, the automated data set generation method 222 is suggested which includes at least one of the first three steps:

At 410, a mean/median optical flow magnitude is calculated and an appropriate pixel level threshold (e.g., 2 pixel) is set. At 420, a frame difference is calculated by e.g., (1) blurring two consecutive frames with a kernel size of 10x10, (2) calculating a per-element absolute difference between the two frames, (4) summing up the difference, (5) relating the sum to the frame size and (6) setting appropriate threshold to detect camera movement (e.g., 90%). At 430, a translation is calculated which is obtained via a homography (H, In projective geometry, a homography is an isomorphism of projective spaces, induced by an isomorphism of the vector spaces from which the projective spaces derive.) between two consecutive frames and an appropriate threshold is set which decides which translation level is enough to detect camera movement (e.g., 0.1).

$$\begin{bmatrix} x_1 \\ y_1 \\ 1 \end{bmatrix} = H \begin{bmatrix} x_2 \\ y_2 \\ 1 \end{bmatrix} = \begin{bmatrix} h_{00} & h_{01} & h_{02} \\ h_{10} & h_{11} & h_{12} \\ h_{20} & h_{21} & h_{22} \end{bmatrix} \begin{bmatrix} x_2 \\ y_2 \\ 1 \end{bmatrix}$$

At 440, a metric of how to weight various measures of how different two consecutive frames are is created. One rule could be that a consecutive frame_n+m to frame_n is added to the data set e.g., only if for frame_n+m all three thresholds from 410, 420 and 430 are positive.

The output of the automated data set generation method 222 is a data set that can be used for training the unsupervised learning method, in the present embodiment a monocular depth estimation network.

Experiments have shown that the combination of these or similar steps allows for more than ten-fold speed improvements with regards to data set generation in comparison to manual or semi-automated procedures.

Figs. 5a and 5b illustrate the 3D reconstruction of the sewer line 134 (as shown in Fig. 1) in more detail. The output of the unsupervised learning method is a depth prediction for each pixel from the single input frame. With computational frameworks and algorithms for example from Open3D and the camera intrinsics a point cloud can be computed. 3D reconstruction of a sewer line has so far been only a solvable task when expensive and dedicated equipment was deployed on-site to record various raw sensor data input streams (e.g., LIDAR, Sonar, RADAR, etc.). 3D reconstruction based on monocular videos has not been done before for sewer systems. First, because even well-known and state-of-the-art model-based monocular approaches (e.g. ORB-SLAM3) are doomed to fail due to the specific and feature poor sewer line environments. Second, data set generation took too much time and effort. Third, even with a theoretical data set and available unsupervised monocular depth estimation frameworks a point-cloud-based 3D reconstruction fails for the same reasons as the model-based monocular approaches since the sewer line point clouds don't contain enough features to allow for registration (e.g., via well-known state-of-the-art algorithms such as ICP https://en.wikipedia.org/wiki/Iterative closest point). A specific sewer line environment makes translation estimation basically impossible both for images and for point clouds since a pipe is usually too feature poor between two time_steps_n and time_step_n+1, as it is illustrated in Fig. 5a. Whereas a rotational difference can be estimated relatively well between two frames and point clouds. This follows the logic and intuition that it is impossible to stich two similar point cloud cylinders with an accurate translation estimation together. The most likely outcome is that a given algorithm will minimize the distance between the two cylinder point clouds. This leads to the outcome that the two point clouds will end up overlapping completely. In cases or sections where the sewer line contains enough visual and/or 3D features it could be possible to combine complete point clouds instead of slices to generate or improve an overall 3D reconstruction of the sewer line.

Fig. 5b shows a sewer line 3D reconstruction of the sewer line (see block 134 in Fig. 1) in more detail. The 3D reconstruction receives as input geometrical information, such as depth and a point cloud, prediction output from the unsupervised learning method and which are stored to a database. At 510, position information (either from video meta data or from optical character recognition) is stored for each frame or point cloud to the database. At 520, overall metrics of the point clouds are calculated (e.g. mean, max x/y/z values and other statistical information) and are stored to the database. At 530, optimal vertical (or horizontal or any other direction) slices of the point clouds are extracted with the calculated metrics. At 540, homography between two consecutive frames/point clouds are calculated and a rotation matrix is obtained. At 550, given information for each frame or point cloud (e.g. position, optimal point cloud slice and rotation between two consecutive frames) is accessed from database and overall reconstruction is completed.

Fig. 6a illustrates the analysis of defects based on 3D reconstruction (see block 136 within the unsupervised data analysis stream 130 in Fig. 1). All known products, patents, and research papers rely on supervised learning to classify observations and generate reports or any analysis of sewer systems. A method has been created which allows for detecting defects (and/or classification and/or severity estimation) based on unsupervised learning results. At 610, an optimal radius of a sewer line is calculated based on the overall metrics stored in the database. At 620, each optimal slice of the point cloud is separated into section, e.g. statistical outlier points, points close to the optimal radius and points within the sewer line. At 630, appropriate statistical thresholds are selected to identify how severely the sewer line diverges from the optimal radius. Additionally or instead of these heuristic based filters another supervised learning model could be trained and perform predictions based on the 3D reconstruction results.

Figs. 6b and 6c illustrate how defect classification may be performed (after defects have been detected) even though the training data has not been labelled by any human expert. Defect classification may be performed, for example by form factors and relying on heuristics that deposits are at the bottom of a sewer line. That means that when a point cloud slice diverges only in a bottom region from the optimal radius, the frame can be classified as "deposit". Fig. 6b shows a point cloud slice of a frame of a sewer line without any defects, whereas Fig. 6c shows a point cloud slice of a frame which has been classified as "deposit".

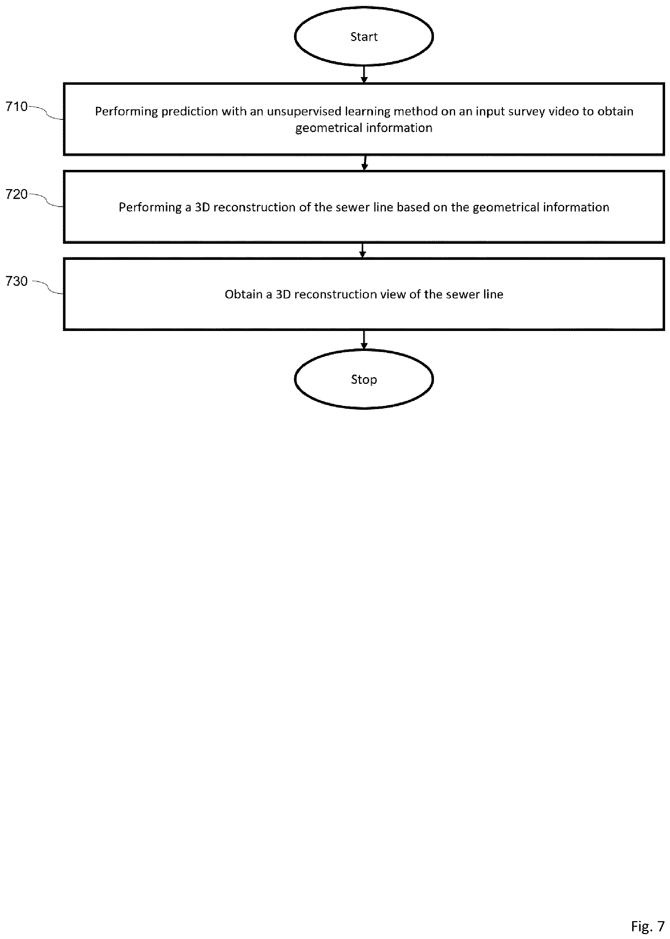

Fig. 7 illustrates a method of how a 3D reconstruction view of a sewer line may be obtained. At 710, a prediction with an unsupervised learning method is performed on an input survey video of a sewer line to obtain geometrical information. It should be noted that the unsupervised learning method is preceded by an automated data set generation method as shown in Fig. 4. At 720, the 3D reconstruction of the sewer line is obtained based on the geometrical information. The 3D reconstruction may be performed as shown in Fig. 5a and 5b. At 730, a view of the 3D reconstruction of the sewer line is obtained.

Fig. 8 illustrates how results of the supervised data analysis stream 110 and the unsupervised data analysis stream 130 are combined. All known products, patents, and research papers rely on a single analysis stream to classify observations and generate reports or any analysis of sewer systems. Therefore, a method is suggested which allows for combination of various analysis streams to generate an overall defect analysis, report and/or view. As in every other machine/deep learning domain also for sewer systems it is true that human expert labels are error prone and never all possible data points can be seen during training or haven been labelled. There will always be events that the system has never seen before. A method is suggested to combine supervised, unsupervised and any other relevant data to increase accuracy of the output so significantly that no human expert quality is needed anymore. At 810, a frame sequence from the supervised data analysis stream after the video analysis method, a frame sequence from the unsupervised data analysis stream and optionally frames marked by a human expert as relevant and part of the meta data for the report collected during the survey process are connected. At 820, the resulting combined sequence is sorted e.g. either by position information if available for all frames in the resulting sequence or by frame number (= time when frame occurred in video). At 830, the sorted frame sequence is passed through a filtering as described in Fig. 3 with reference to the video analysis method 118. Combining various input data streams for a final report allows to increase accuracy so significantly that a human expert quality check could be removed.

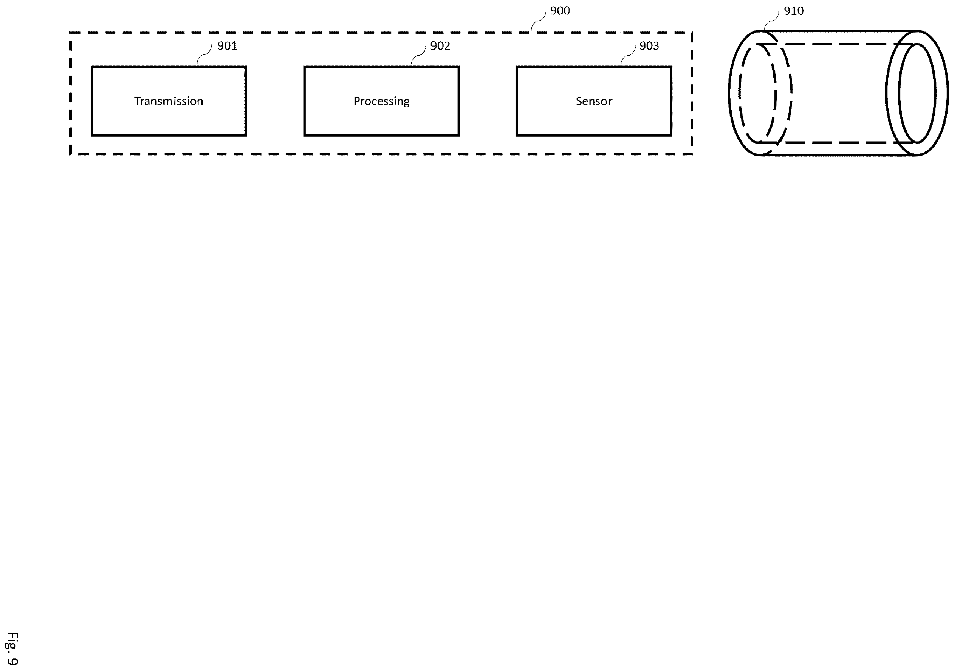

Fig. 9 illustrates a sewer survey system 900 and a sewer line 910. The sewer survey system 900 includes sensor(s) (e.g., camera, LIDAR, Sonar, RADAR, etc.) 903, a processing unit 902 and a transmission system 901 that either allows transmission of the survey data via cable, USB data transfer or wireless. The processing unit 902 can be designed so that all or selected parts of the preceding sections can be performed and executed.

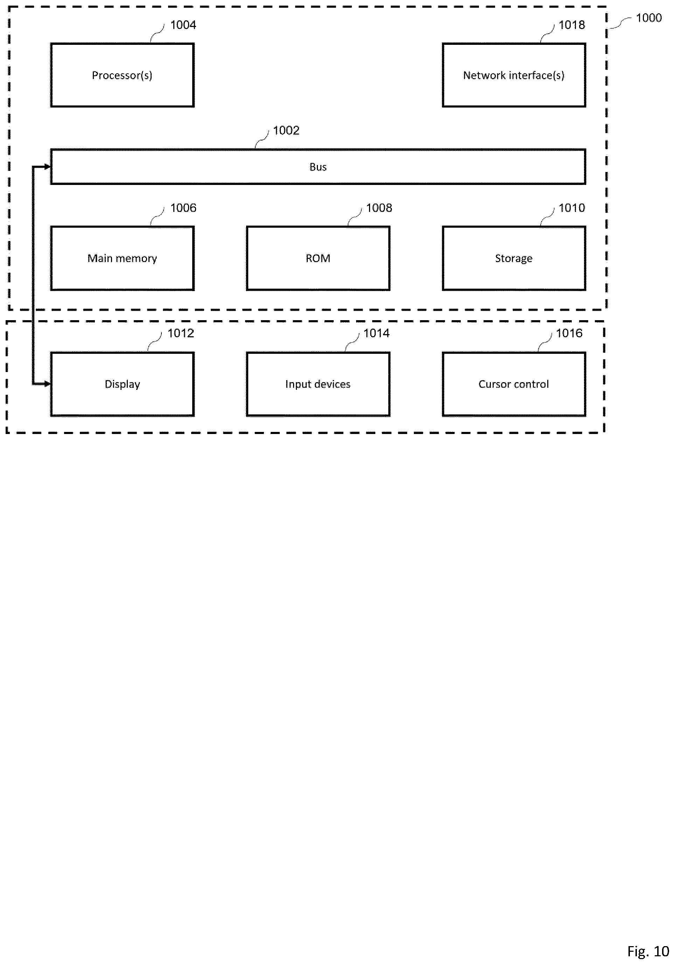

Fig. 10 is a block diagram that illustrates a computer system 1000 upon which any of the embodiments described herein may be implemented. The computer system 1000 includes a bus 1002 or other communication mechanism for communicating information, one or more hardware processors 1004 coupled with bus 1002 for processing information. Hardware processor(s) 1004 may be, for example, one or more general purpose microprocessors.

The computer system 1000 also includes a main memory 1006, such as a random access memory (RAM), cache and/or other dynamic storage devices, coupled to bus 1002 for storing information and instructions to be executed by processor 1004. Main memory 1006 also may be used for storing temporary variables or other intermediate information during execution of instructions to be executed by processor 1004. Such instructions, when stored in storage media accessible to processor 1004, render computer system 1000 into a special-purpose machine that is customized to perform the operation specified in the instructions.

The computer system 1000 further includes a read only memory (ROM) 1008 or other static storage device coupled to bus 1002 for storing static information and instructions for processor 1004. A storage device 1010, such as a magnetic disk, optical disk, or USB thumb drive (Flash drive), etc., is provided and coupled to bus 1002 for storing information and instructions.

The computer system 1000 may be coupled via bus 1002 to a display 1012, such as a cathode ray tube (CRT) or LCD display (or touch screen), for displaying information to a computer user. An input device 1014, including alphanumeric and other keys, is coupled to bus 1002 for communicating information and command selections to processor 1004. Another type of user input device is cursor control 1016, such as mouse, a trackball, or cursor directions keys for communicating direction information and command selections to processor 1004 and for controlling cursor movement on display 1012. This input device typically has two degrees of freedom in two axes, a first axis (e.g., x) and a second axis (e.g., y), that allows the device to specify positions in a plane. In some embodiments, a same direction information and command selections as cursor control may be implemented via receiving touches on a touch screen without a cursor.

The computer system 1000 may include a user interface module to implement a GUI that may be stored in a mass storage device as executable software codes that are executed by the computing device(s). This and other modules may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

In general, the word "module" as used herein, refers to logic embodied in hardware or firmware, or to a collection of software instructions, possibly having entry and exit points, written in a programming language, such as, for example, Java, C or C++. A software module may be compiled and linked into an executable program, installed in a dynamic link library, or may be written in an interpreted programming language such as, for example, BASIC, Perl, or Python. It will be appreciated that software modules may be callable from other modules or from themselves, and/or may be invoked in response to detected events or interrupts. Software modules configured for execution on computing devices may be provided on a computer readable medium, such as a compact disc, digital video disc, flash drive, magnetic disc, or any other tangible medium, or as a digital download (and may be originally stored in a compressed or installable format that requires installation, decompression, or decryption prior to execution). Such software code may be stored, partially or fully, on a memory device of the executing computing device, for execution by the computing device. Software instructions may be embedded in firmware, such as an EPROM.

It will be further appreciated that hardware modules may be comprised of connected logic units, such as gates and flip-flops, and/or may be comprised of programmable units, such as programmable gate arrays or processors. The modules or computing device functionality described herein are preferably implemented as software modules but may be represented in hardware or firmware. Generally, the modules described herein refer to logical modules that may be combined with other modules or divided into sub-modules despite their physical organization or storage.

The computer system 1000 may implement the techniques described herein using customized hard-wired logic, one or more ASIC or FPGAs, firmware and/or program logic which in combination with the computer system causes or programs computer system 1000 to be a special-purpose machine. According to one embodiment, the techniques herein are performed by computer system 1000 in response to processor(s) 1004 executing one or more sequences of one or more instructions contained in main memory 1006. Such instructions may be read into main memory 1006 from another storage medium, such as storage device 1010. Execution of the sequences of instructions contained in main memory 1006 causes processor(s) 1004 to perform the process steps described herein. In alternative embodiments, hard-wired circuitry may be used in place of or in combination with software instructions.

The term "non-transitory media" and similar terms, as used herein refers to any media that store data and/or instructions that cause a machine to operate in specific fashion. Such non-transitory media may comprise non-volatile media and/or volatile media. Non-volatile media includes, for example, optical or magnetic disks, such as storage device 1010. Volatile media includes dynamic memory, such as main memory 1006. Common forms of non-transitory media include, for example, a floppy disk, a flexible disk, hard disk, solid state drive, magnetic tape, or any other magnetic data storage medium, a CD-ROM, any other optical storage medium, any physical medium with patterns of holes, a RAM, a PROM, and EPROM, a FLASH-EPROM, NVRAM, any other memory chip or cartridge, and networked versions of a same.

Non-transitory media is distinct from but may be used in conjunction with transmission media. Transmission media participates in transferring information between non-transitory media. For example, transmission media includes coaxial cables, copper wire and fiber optics, including the wires that comprise bus 1002. Transmission media can also take the form of acoustic or light waves, such as those generated during radio-wave and infra-red data communications.

Various forms of media may involve in carrying one or more sequences of one or more instructions to processor 1004 for execution. For example, the instructions can initially be carried on a magnetic disk or solid state drive of a remote computer. The remote computer may load the instructions into its dynamic memory and send the instructions over a telephone line using a modem. A modem local to computer system 1000 can receive the data on the telephone line and use an infra-red transmitter to convert the data to an infra-red signal. An infra-red detector can receive the data carried in the infra-red signal and appropriate circuitry can place the data on bus 1002. Bus 1002 carries the data to main memory 1006, from which processor 1004 retrieves and executes the instructions. The instructions received by main memory 1006 may optionally be stored on storage device 1010 either before or after execution by processor 1004.

The computer system 1000 also includes a communication interface 1018 coupled to bus 1002. Communication interface 1018 provides a two-way data communication coupling to one or more network links that are connected to one or more local networks. For example, communication interface 1018 may be an integrated services digital network (ISDN) card, cable modem, satellite modem, or a modem to provide a data communication connection to a corresponding type of telephone line. As another example, communication interface 1018 may be a local area network (LAN) card to provide a data communication connection to a compatible LAN (or WAN component to communicated with a WAN). Wireless links may also be implemented. In any such implementation, communication interface 1018 sends and receives electrical, electromagnetic or optical signal that carry digital data streams representing various types of information.

A network link typically provides data communication through one or more networks to other data devices. For example, a network link may provide a connection through local network to a host computer or to data equipment operated by an Internet Service Provider (ISP). The ISP in turn provides data communication services through the world wide packet data communication network now commonly referred to as the "Internet". Local network and Internet both use electrical, electromagnetic, or optical signals that carry digital data streams. The signals through the various networks and the signals on network link and through communication interface 1018, which carry the digital data to and from computer system 1000, are example forms of transmission media.

The computer system 1000 can send messages and receive data, including program code, through the network(s), network link and communication interface 1018. In the Internet example, a server might transmit a requested code for an application program through the Internet, the ISP, the local network and the communication interface 1018. The computer system 1000, on which embodiments of the invention may be implemented, may be a server of a client-server system. A client may interact with the server in order to be able to perform embodiments of the invention as disclosed herein. A program implementing the invention may either be executed on the server or may be downloaded onto a client and executed on the client or a further computer. In this context, reference is made to the doctrine of contributory or indirect patent infringement which applies in many jurisdictions.

The received code may be executed by processor 1004 as it is received, and/or stored in storage device 1010, or other non-volatile storage for later execution.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above may be used independently of one another, or may be combine in various ways. All possible combination and sub-combinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

Conditional language, such as, among others, "can", "could", "might", or "may" unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in a way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

The expressions "comprise(s) a, b, c, ...", "comprising a, b, c, ..." and "is/are based on a, b, c,..." refer to a non-exhaustive enumeration of items.

It should be emphasized that many variations and modification may be made to the above-describe embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and equivalents thereof.

## Claims

1. A computer-implemented method of automated or assisted inspection of a sewer line, the method comprising:

    performing a supervised data analysis stream on an input survey video of the sewer line, comprising:
    performing prediction with a supervised learning method on frames of the input survey video to analyse the frames regarding defects; and
    performing an unsupervised data analysis stream on the input survey video, comprising:

        performing prediction with an unsupervised learning method on the input survey video to obtain geometrical information; and
        performing a 3D reconstruction of the sewer line based on the geometrical information; and

    combining results of the supervised data analysis stream and the unsupervised data analysis stream.

2. The computer-implemented method of claim 1, wherein performing the unsupervised data analysis stream further comprises
analysing defects of the sewer line based on the 3D reconstruction of the sewer line.

3. The computer-implemented method of claim 1 or 2, wherein performing a supervised data analysis stream further comprises
performing a video analysis method by applying filtering on a sequence of the analysed frames to reduce the number of frames.

4. The computer-implemented method of any one of the preceding claims, further comprising a further data analysis stream based on human codes, which are either from a database, detected via optical character recognition, meta data or other information.

5. The computer-implemented method of any one of claims 2 to 4, wherein the filtering takes into account the continuous nature of the input survey video and is based on at least one of:

    interpolating missing position information,
    temporal filter,
    duplicating top-1 prediction filter,
    Laplacian filter,
    severity filter,
    probability of reliability filter,
    position filter,
    similarity filter,
    a remove good frames filter, and
    an add header filter.

6. The computer-implemented method of any one of the preceding claims, wherein the supervised learning method is based on a convolutional neural network, CNN, which has been trained with labelled data sets.

7. The computer-implemented method of any one of the preceding claims, wherein the unsupervised learning method is based on a monocular depth estimation model which has been trained using an automated data set generation method without human expert supervision or input.

8. The computer-implemented method of claim 7, wherein the automated data set generation method comprises at least one of the following three steps:

calculating mean or median optical flow magnitude and setting an appropriate pixel level threshold;
calculating frame difference and setting an appropriate threshold;
calculating a translation obtained via homography between two consecutive frames and setting an appropriate threshold deciding which translation level is enough to detect camera movement; and
creating a metric of how to weight the calculated measures of how different two consecutive frames are.

**9.** The computer-implemented method of any one of the preceding claims, wherein performing the 3D reconstruction of the sewer line comprises:

storing position information for each frame or point cloud to a database;
calculating overall metrics of the point clouds;
extracting optimal slices of the point clouds with the calculated overall metrics;
calculating homography between two frames or point clouds and obtaining a rotation matrix; and
accessing given information from the database for each frame or point cloud and completing the 3D reconstruction.

**10.** The computer-implemented method of any one of claims 3 to 9, wherein analysing defects based on the 3D reconstruction comprises

calculating an optimal radius of a given sewer line based on overall metrics;
separating each optimal slice of a point cloud into sections; and
selecting appropriate statistical thresholds to identify how severely the sewer diverges from the optimal radius by selecting appropriate statistical thresholds.

**11.** The computer-implemented method of any one of the preceding claims, wherein combining the results of the supervised data analysis stream and the unsupervised data analysis stream comprises filtering.

**12.** The computer-implemented method of any one of the preceding claims, wherein combining the results of the supervised data analysis stream and the unsupervised data analysis stream comprises:

connecting frame sequences from supervised learning stream after the video analysis method and frame sequence from unsupervised learning stream;
sorting the resulting combined sequence either by position information or by frame number; and
passing the sorted frame sequence through a filtering.

**13.** The computer-implemented method of any one of the preceding claims, further comprising
using a view and defect analysis of the sewer line for generating a report for a user.

**14.** One or more computer-readable storage media comprising computer-executable instructions stored thereon which, when executed by one or more processors, cause the one or more processors to perform the computer-implemented method of any one of the preceding claims.

**15.** A computer system, comprising:

one or more processors;
one or more computer-readable storage media having computer-executable instructions stored thereon, wherein the one or more computer-executable instructions are configured to cause the one or more processors to perform a method of any one of the claims 1 to 13.

160
Combining results of supervised and unsupervised data analysis streams (and optionally other data analysis streams)
110
115
Prediction of supervised learning method
118
Video analysis method
130
132
Prediction of unsupervised learning method
134
3D reconstruction of sewer line
136
Defect analysis
140
Human codes, meta data or other relevant information
210
Training of supervised learning method
105
Input Survey Video
220
Training of unsupervised learning method

Fig. 1

115
Data set with labels from human experts
210
Training of supervised learning method
115
132
Automated data set generation method
220
Training of unsupervised learning method
132

Fig. 2

115

- Interpolating missing position information
- Temporal filter
- Duplicates top-1 prediction filter
- Laplacian filter
- Severity filter
- Probability or reliability filter
- Position filter
- Similarity filter
- Remove good frames filter
- Add header filter

Fig. 3

Start
410
Calculating mean/median optical flow and setting an appropriate pixel level threshold
420
Calculating frame difference
430
Calculating a translation obtained via a homography between two consecutive frames and setting appropriate threshold deciding which translation level is enough to detect camera movement
440
Creating a metric of how to weight various measures of how different two consecutive frames are
Stop

Fig. 4

time_step_n
time_step_n+1

Fig. 5a

Start
510
Storing position information (either from video meta data or from OCR) for each frame / point cloud to DB
520
Calculating overall metrics of point clouds
530
Extracting optimal vertical (or horizontal or any other direction) slides of the point clouds with calculated metrics
540
Calculating homography between two consecutive frames / point clouds and obtaining rotation matrix
550
Accessing given information from DB for each frame (e.g. position, optimal point cloud slice and rotation between two consecutive frames) and completing overall reconstruction
Stop

Fig. 5b

Start
610
Calculating an optimal radius of a sewer line based on overall metrics
620
Separating each optimal slide of the point cloud into sections
630
Selecting appropriate statistical thresholds to identify how severely the sewer line diverges from the optimal radius
Stop

Fig. 6a

Optimal radius
Outlier

Fig. 6b

Optimal radius
Outlier

Fig. 6c

Start
710
Performing prediction with an unsupervised learning method on an input survey video to obtain geometrical information
720
Performing a 3D reconstruction of the sewer line based on the geometrical information
730
Obtain a 3D reconstruction view of the sewer line
Stop

Fig. 7

Start
810
Connecting frame sequence from supervised data analysis stream after video analysis method, frame sequence from unsupervised data analysis stream and optionally frames marked by a human expert as relevant and part of the meta data for the report collected during the survey process
820
Sorting the resulting combined sequence
830
Passing the sorted frame sequence through a filter
Stop

Fig. 8

910
900
903
Sensor
902
Processing
901
Transmission

Fig. 9

1000
1004
Processor(s)
1018
Network interface(s)
1002
Bus
1006
Main memory
1008
ROM
1010
Storage
1012
Display
1014
Input devices
1016
Cursor control

Fig. 10

# EUROPEAN SEARCH REPORT

Application Number
EP 21 21 6170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br><br><br><br><br><br><br><br>A | FANG XU ET AL: "Sewer Pipeline Fault Identification Using Anomaly Detection Algorithms on Video Sequences", IEEE ACCESS, IEEE, USA, vol. 8, 24 February 2020 (2020-02-24), pages 39574-39586, XP011776023, DOI: 10.1109/ACCESS.2020.2975887 [retrieved on 2020-03-02]<br>* abstract *<br>* page 39578, column 1, section 2 *<br>* page 39576, column 1, section III *<br>----- | 1-7, 11-15<br><br><br><br><br><br><br><br>8-10 | INV.<br>G06T7/00<br>G06T7/254<br>G06T7/269<br>G06T7/50<br>G06T7/62 |
| Y<br><br><br><br><br><br><br><br><br><br><br><br>A | LE DINH VAN-KHOA ET AL: "Multi-sensors in-line inspection robot for pipe flaws detection", IET SCIENCE, MEASUREMENT AND TECHNOLOGY, THE INSTITUTION OF ENGINEERING AND TECHNOLOGY, MICHAEL FARADAY HOUSE, SIX HILLS WAY, STEVENAGE, HERTS. SG1 2AY, UK, vol. 14, no. 1, 1 January 2020 (2020-01-01), pages 71-82, XP006088396, ISSN: 1751-8822, DOI: 10.1049/IET-SMT.2019.0171<br>* abstract *<br>* page 80, column 2, last paragraph - page 81, column 1, paragraph 1 *<br>* page 73, column 2, section 2.6, paragraph 2 *<br>----- | 1-7, 11-15<br><br><br><br><br><br><br><br><br><br><br><br>8-10 | TECHNICAL FIELDS SEARCHED (IPC)<br>G06T |

The present search report has been drawn up for all claims

| Place of search | Date of completion of the search | Examiner |
|---|---|---|
| Munich | 20 May 2022 | Turina, Andreas |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 721581 B2
- EP 1305594 B1
- US 8024066 B2
- KR 102008973 B1
- TW 607552
- US 20210181119 A1


### Non-patent literature cited in the description


- **ALEX KRIZHEVSKY et al.** ImageNet Classification with Deep Convolutional Neural Networks. *NeurIPS,* 2012
- **JOSEPH REDMON et al.** You Only Look Once: Unified, Real-Time Object Detection. *CoRR,* 2015